(19) Europäisches Patentamt / European Patent Office / Office européen des brevets

(11) **EP 4 339 880 A1**

(12) **EUROPEAN PATENT APPLICATION**

(43) Date of publication:
**20.03.2024  Bulletin 2024/12**

(21) Application number: **23186036.2**

(22) Date of filing: **18.07.2023**

(51) International Patent Classification (IPC):
**G06T 5/00** *(2024.01)*

(52) Cooperative Patent Classification (CPC):
**G06T 5/90;** G06T 2207/10081; G06T 2207/10088;
G06T 2207/20081; G06T 2207/20084;
G06T 2207/20224; G06T 2207/30056;
G06T 2207/30061

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.09.2022  KR 20220118164
12.10.2022  KR 20220130819**

(71) Applicant: **Medicalip Co., Ltd.
Gangwon-do 24341 (KR)**

(72) Inventors:
• **Park, Sang Joon
Seoul (KR)**
• **Kim, Jong Min
Yongin-si (KR)**
• **Chung, Han Jae
Seoul (KR)**
• **Ham, Seung Min
Seoul (KR)**

(74) Representative: **Patentanwälte
Ruff, Wilhelm, Beier, Dauster & Partner mbB
Kronenstraße 30
70174 Stuttgart (DE)**

(54) **MEDICAL IMAGE CONVERSION METHOD AND APPARATUS**

(57)     Disclosed is a medical image conversion method and apparatus. The medical image conversion apparatus trains a first artificial intelligence model (700) to output a second contrast-enhanced image, based on first learning data including a pair of a first contrast-enhanced image and a first non-contrast image, and trains a second artificial intelligence model (710) to output a second non-contrast image, based on second learning data including a pair of the first non-contrast image of the first learning data and the second contrast-enhanced image.

FIG. 7

EP 4 339 880 A1

**Description**

The invention relates to a method and apparatus for converting a medical image, and more particularly, to a method and apparatus for converting a contrast-enhanced image into a non-contrast image or converting a non-contrast image into a contrast-enhanced image.

The disclosure was supported by the "AI Precision Medical Solution (Doctor Answer 2.0) Development" project hosted by Seoul National University Bundang Hospital (Project Serial No.: 1711151151, Project No.: S0252-21-1001). This application is based on and claims priority under 35 U.S.C. §119 to Korean Patent Application No. 10-2022-0118164, filed on September 19, 2022, in the Korean Intellectual Property Office, and Korean Patent Application No. 10-2022-0130819, filed on October 12, 2022, in the Korean Intellectual Property Office, the disclosures of which are incorporated by reference herein in their entireties.

To more clearly identify a lesion, etc., during diagnosis or treatment, a contrast medium is administered to a patient to perform computed tomography (CT) or magnetic resonance imaging (MRI). A medical image captured by administering the contrast medium to the patient may enable clear identification of a lesion, etc. due to a high contrast of a tissue. However, a contrast medium is nephrotoxic. For example, a gadolinium contrast medium used in MRI has higher nephrotoxicity than an iodinated contrast medium used in CT imaging and thus may not be used in the case of renal function degradation.

The non-contrast image and the contrast-enhanced image have a difference in terms of a Hounsfield unit range, and the non-contrast image is more accurate to recognize a quantified value for a fatty liver, emphysema, etc. When a contrast-enhanced image is captured for a purpose such as a lesion diagnosis, etc., it is difficult to identify a quantified value of a lesion, etc. On the other hand, when a non-contrast image is captured, a quantified value may be identified, but accurately identifying a lesion is difficult. Thus, to identify a quantified value together with a diagnose of a lesion, etc., both a non-contrast image and a contrast-enhanced image have to be captured, which inconveniences a patient.

It is the technical problem underlying the invention to provide a medical image conversion method and apparatus for converting a non-contrast image into a contrast-enhanced image or a contrast-enhanced image into a non-contrast image to obtain both the non-contrast image and the contrast-enhanced image through single medical imaging, said method and apparatus alleviating or avoiding at least some of the inconveniences of prior art medical image conversion methods and arrangements.

The invention solves this problem by providing a medical image conversion method having the features of claim 1 and a medical image conversion apparatus having the features of claim 8. Advantageous embodiments of the invention are mentioned in the dependent claims, the wording of which is herewith incorporated into the description by reference to avoid unnecessary text repetitions. Additional aspects will be set forth in part in the description which follows and, in part, will be apparent from the description, or may be learned by practice of the presented embodiments of the invention.

According to the invention, a medical image conversion method executed by a medical image conversion apparatus implemented as a computer includes training a first artificial intelligence model to output a second contrast-enhanced image, based on first learning data including a pair of a first contrast-enhanced image and a first non-contrast image and training a second artificial intelligence model to output a second non-contrast image, based on second learning data including a pair of the first non-contrast image of the first learning data and the second contrast-enhanced image.

According to another aspect of the invention, a medical image conversion apparatus includes a first artificial intelligence model configured to generate a contrast-enhanced image from a non-contrast image, a second artificial intelligence model configured to generate a non-contrast image from a contrast-enhanced image, a first learning unit configured to train the first artificial intelligence model by using first learning data including a pair of a contrast-enhanced image and a non-contrast image, and a second learning unit configured to train the second artificial intelligence model based on second learning data including a pair of the non-contrast image of the first learning data and a contrast-enhanced image obtained by the first artificial intelligence model.

The above and other aspects, features, and advantages of the invention will be more apparent from the following description of exemplary embodiments of the invention taken in conjunction with the accompanying drawings, in which:

FIG. 1 is a view showing an example of a medical image conversion apparatus according to an embodiment;
FIG. 2 shows an example of a learning method used by an artificial intelligence model according to an embodiment;
FIG. 3 shows an example of a method of generating a non-contrast image for learning data, according to an embodiment;
FIG. 4 shows an example of an additional learning method used by an artificial intelligence model according to an embodiment;
FIG. 5 shows another example of an additional learning method used by an artificial intelligence model according to an embodiment;
FIG. 6 is a flowchart showing an example of a learning process of an artificial intelligence model according to an embodiment;

FIG. 7 is a view showing a configuration of an example of a medical image conversion apparatus according to an embodiment;

FIG. 8 shows an example of converting a non-contrast image into a contrast-enhanced image by using a medical image conversion method, according to an embodiment;

FIG. 9 shows an example of a method of identifying a quantified value from a contrast-enhanced image by using a medical image conversion method according to an embodiment;

FIG. 10 shows an example of identifying a fatty liver level by using a medical image conversion method according to an embodiment;

FIGS. 11 and 12 show an example of identifying an emphysema region by using a medical image conversion method according to an embodiment; and

FIG. 13 shows an example of identifying a muscle region by using a medical image conversion method according to an embodiment.

Reference will now be made in detail to embodiments, examples of which are illustrated in the accompanying drawings, wherein like reference numerals refer to like components throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items.

Hereinafter, a medical image conversion method and apparatus according to an embodiment will be described in detail with reference to the accompanying drawings.

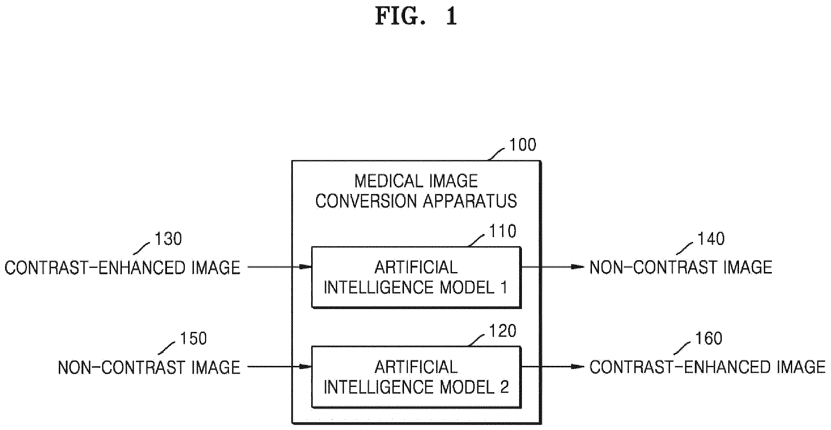

FIG. 1 is a view showing an example of a medical image conversion apparatus according to an embodiment.

Referring to FIG. 1, a medical image conversion apparatus 100 includes a first artificial intelligence model 110 and a second artificial intelligence model 120. The first artificial intelligence model 110 outputs a non-contrast image 140 in response to an input of a contrast-enhanced image 130 thereto, and the second artificial intelligence model 120 outputs a contrast-enhanced image 160 in response to an input of a non-contrast image 150 thereto. The non-contrast image 130 input to the first artificial intelligence model 110 may be a CT or MRI image captured without injecting a contrast medium into a patient, and the contrast-enhanced image 150 input to the second artificial intelligence model 120 may be a CT or MRI image captured with administration of a contrast medium into the patient. Hereinbelow, for convenience of a description, the description will be mainly made assuming that an image was captured by CT.

The first artificial intelligence model 110 and the second artificial intelligence model 120 may be implemented with conventional various artificial neural networks such as a convolutional neural network (CNN), U-Net, etc., without being limited to specific examples. The first artificial intelligence model 110 and the second artificial intelligence model 120 may be implemented with the same type of an artificial neural network or with different types of artificial neural networks.

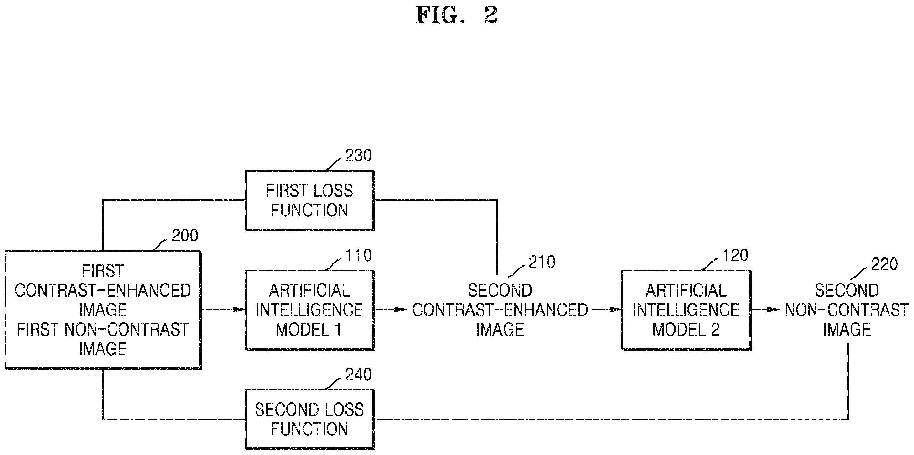

The first artificial intelligence model 110 and the second artificial intelligence model 120 may be generated through training using learning data including pairs of contrast-enhanced images and non-contrast images. The learning data may include contrast-enhanced images and/or non-contrast images obtained by photographing an actual patient, or may include virtual contrast-enhanced images or virtual non-contrast images generated through processing of a user. A method of training the first artificial intelligence model 110 and the second artificial intelligence model 120 using the learning data will be described in FIG. 2.

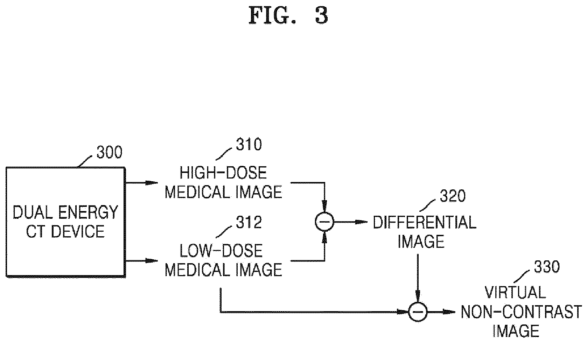

Generally, capturing both contrast-enhanced and non-contrast images for diagnosis, etc. is rarely performed. A method of generating a virtual non-contrast image to generate learning data in the presence of a patient's contrast-enhanced image will be described with reference to FIG. 3.

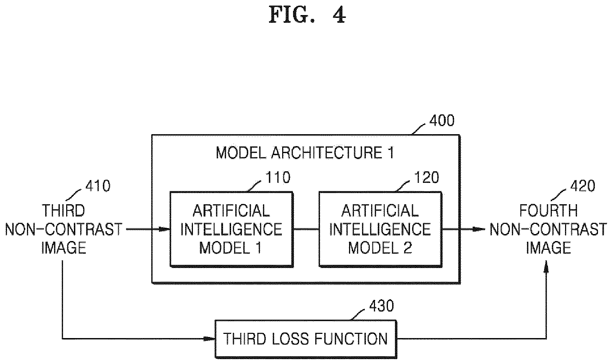

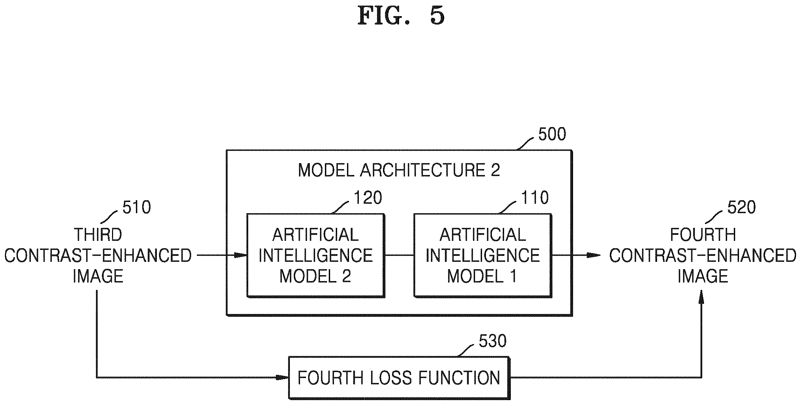

To train a first artificial intelligence model and a second artificial intelligence model, learning data including a pair of a contrast-enhanced image and a non-contrast-enhanced image is generally required. As there is a limitation in collecting a large amount of learning data or generating the same by a user, the first artificial intelligence model and the second artificial intelligence model may be trained using a method of FIG. 2 and then may be further trained with an actually captured contrast-enhanced image or an actually captured non-contrast-enhanced image. This will be described with reference to FIGS. 4 and 5.

FIG. 2 shows an example of a learning method used by an artificial intelligence model according to an embodiment.

Referring to FIG. 2, learning data 200 may include a pair of a contrast-enhanced image and a non-contrast image. The number of pairs of contrast-enhanced images and non-contrast images included in the learning data 200 may vary with embodiments. In an embodiment, the non-contrast image of the learning data 200 may be an actually captured CT image or an image virtually generated through a method of FIG. 3.

The first artificial intelligence model 110 may be a model that outputs a contrast-enhanced image upon input of a non-contrast image thereto. The first artificial intelligence model 110 may output a second contrast-enhanced image 210 upon input of a first non-contrast image of the learning data 200 thereto, and perform a learning process of adjusting an internal parameter, etc., to minimize a first loss function 230 indicating a difference between the second contrast-enhanced image 210 and the second non-contrast image of the learning data 200. Conventional various loss functions indicating a difference between two images may be used as the first loss function 230 of the current embodiment.

The first artificial intelligence model 110 may repeat a learning process until a value of the first loss function 230 is less than or equal to a predefined value or repeat the learning process a predefined number of times. In addition, various learning methods for optimizing the performance of an artificial intelligence model based on a loss function may be applied to the current embodiment.

The second artificial intelligence model 120 may be a model that outputs a non-contrast image upon input of a contrast-enhanced image thereto. The second artificial intelligence model 120 may output a second non-contrast image 220 upon input of the second contrast-enhanced image 210 output from the first artificial intelligence model 110 thereto, and perform a learning process of adjusting an internal parameter, etc., to minimize a second loss function 240 indicating a difference between the second non-contrast image 220 and the first non-contrast image of the learning data 200. In another embodiment, the second artificial intelligence model 120 may output the second non-contrast image 220 upon input of the first non-contrast image of the learning data 200 thereto, and perform a learning process of adjusting an internal parameter, etc., to minimize the second loss function (240) indicating the difference between the second non-contrast image 220 and the first non-contrast image of the learning data 200.

FIG. 3 shows an example of a method of generating a non-contrast image for learning data, according to an embodiment.

Referring to FIG. 3, when a contrast-enhanced image is actually captured, a medical image conversion apparatus 100 may virtually generate a non-contrast image by using the contrast-enhanced image. The contrast-enhanced image may include two medical images (e.g., a high-dose medical image 310 and a low-dose medical image 312) captured at different doses by using a dual energy CT (DECT) device after administration of a contrast medium. A single energy CT (SECT) device may output one medical image of a certain dose, but the DECT device may output two different doses of medical images.

The medical image conversion apparatus 100 may generate a differential image 320 between the high-dose medical image 310 and the low-dose medical image 312. For example, the medical image conversion apparatus 100 may generate a differential image by subtracting a Housefield unit (HU) of each pixel of the low-dose medical image 312 from an HU of each pixel of the high-dose medical image 310.

The medical image conversion apparatus 100 may generate a virtual non-contrast image 330 indicating a difference between the differential image 320 and the high-dose medical image 310 (or the low-dose medical image 312). For example, the medical image conversion apparatus 100 may generate the virtual non-contrast image 330 by subtracting an HU of each pixel of the high-dose medical image 310 (or the low-dose medical image 312) from an HU of each pixel of the differential image 320. The virtual non-contrast image 330 may be used as the first non-contrast image of the learning data 200 described with reference to FIG. 2.

When a contrast-enhanced image is captured using a DECT device, a separate non-contrast image does not need to be captured for generation of learning data for the first artificial intelligence model 110 and the second artificial intelligence model 120. Moreover, the non-contrast image may be automatically generated from two different doses of medical images output from the DECT device without user's direct processing.

FIG. 4 shows an example of an additional learning method used by an artificial intelligence model according to an embodiment.

Referring to FIG. 4, the medical image conversion apparatus 100 may generate a first model architecture 400 in which the first artificial intelligence model 110 and the second artificial intelligence model 120 are sequentially connected. In the first model architecture 400, an output image of the first artificial intelligence model 110 may be an input image of the second artificial intelligence model 120.

The first model architecture 400 may be trained based on a non-contrast image (hereinafter, referred to as a third non-contrast image 410) obtained by actually photographing a patient. For example, the third non-contrast image 410 may be a non-contrast image captured by a SECT device. The first model architecture 400 may output a fourth non-contrast image 420 in response to an input of the third non-contrast image 410 thereto. More specifically, the first artificial intelligence model 110 may output a contrast-enhanced image upon input of the third non-contrast image 410 thereto, and the second artificial intelligence model 120 may output the fourth non-contrast image 420 in response to an input of a contrast-enhanced image, which is an output image of the first artificial intelligence model 110, thereto.

The medical image conversion apparatus 100 may train the first artificial intelligence model 110 and the second artificial intelligence model 120 of the first model architecture 400 based on a third loss function 430 indicating a difference between the fourth non-contrast image 420 and the third non-contrast image 410. That is, the first artificial intelligence model 110 and the second artificial intelligence model 120 may perform an additional learning process of adjusting an internal parameter, etc., to minimize the third loss function 430 based on the actually captured third non-contrast image 410.

FIG. 5 shows another example of an additional learning method used by an artificial intelligence model according to an embodiment.

Referring to FIG. 5, the medical image conversion apparatus 100 may generate a second model architecture 500 in which the second artificial intelligence model 120 and the first artificial intelligence model 110 are sequentially connected. In the second model architecture 500, an output image of the second artificial intelligence model 120 may be an input image of the first artificial intelligence model 110.

The second model architecture 500 may be trained based on an actually captured contrast-enhanced image (hereinafter, referred to as a third contrast-enhanced image 510). For example, the third contrast-enhanced image 510 may be an image captured by the SECT device. The second model architecture 500 may output a fourth contrast-enhanced image 520 in response to an input of the third contrast-enhanced image 510 thereto. More specifically, the second artificial intelligence model 120 may output a non-contrast image in response to an input of the third contrast-enhanced image 510 thereto, and the first artificial intelligence model 110 may output the fourth contrast-enhanced image 520 in response to an input of a non-contrast image from the second artificial intelligence model 120.

The medical image conversion apparatus 100 may train the first artificial intelligence model 110 and the second artificial intelligence model 120 of the second model architecture 500 based on a fourth loss function 530 indicating a difference between the fourth contrast-enhanced image 520 and the third contrast-enhanced image 510. That is, the second artificial intelligence model 120 and the first artificial intelligence model 110 may perform an additional learning process of adjusting an internal parameter, etc., to minimize the fourth loss function 530 based on the actually captured third contrast-enhanced image 510.

The additional learning process of the embodiments of FIGS. 4 and 5 may require a non-contrast image or a contrast-enhanced image without learning data including a pair of a non-contrast image and a contrast-enhanced image. That is, additional learning of the first artificial intelligence model 110 and the second artificial intelligence model 120 may be possible merely with the third non-contrast image 410 or the third contrast-enhanced image 510 without needing to generate an additional virtual contrast-enhanced image or virtual non-contrast image from an actually captured third non-contrast image or an actually captured third contrast-enhanced image.

According to an embodiment, any one of a first additional learning process using the first model architecture 400 of FIG. 4 and a second additional learning process using the second model architecture 500 of FIG. 5 may be performed or these two additional learning processes may be sequentially performed repeatedly.

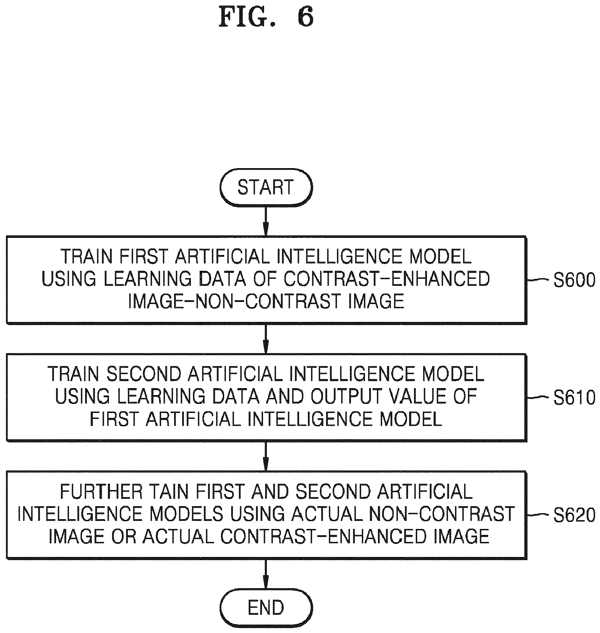

FIG. 6 is a flowchart showing an example of a learning process of an artificial intelligence model according to an embodiment.

Referring to FIG. 6, the medical image conversion apparatus 100 may train a first artificial intelligence model that outputs a second contrast-enhanced image, based on first learning data including a pair of a first contrast-enhanced image and a first non-contrast image, in operation S600.

The medical image conversion apparatus 100 may train a second artificial intelligence model that outputs a second non-contrast image, based on second learning data including a pair of the first non-contrast image of the first learning data and the second contrast-enhanced image, in operation S610. An example of training the first artificial intelligence model and the second artificial intelligence model based on the first learning data and the second learning data is shown in FIG. 2.

The medical image conversion apparatus 100 may further train the first artificial intelligence model and the second artificial intelligence model based on an actually captured contrast-enhanced image or an actually captured non-contrast image, in operation S620. For example, the medical image conversion apparatus 100 may further train the first artificial intelligence model and the second artificial intelligence model by using the first model architecture 400 of FIG. 4 or further train the first artificial intelligence model and the second artificial intelligence model by using the second model architecture 500 of FIG. 5. Further training may be omitted depending on an embodiment.

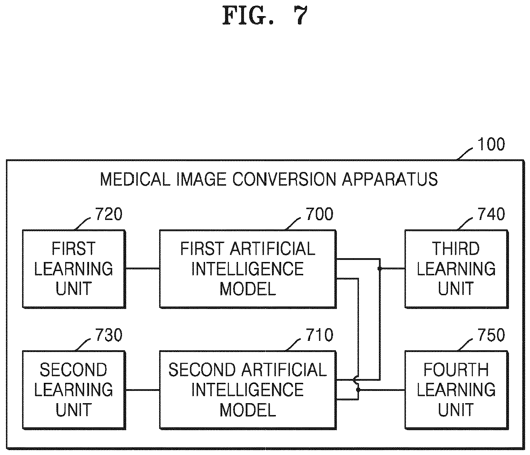

FIG. 7 is a view showing a configuration of an example of a medical image conversion apparatus according to an embodiment.

Referring to FIG. 7, the medical image conversion apparatus 100 includes a first artificial intelligence model 700, a second artificial intelligence model 710, a first learning unit 720, a second learning unit 730, a third learning unit 740, and a fourth learning unit 750. In an embodiment, the medical image conversion apparatus 100 may be implemented as a computing device including a memory, a processor, and an input/output device. In this case, each component may be implemented with software and loaded on a memory, and then may be executed by a processor.

In addition, additional components may be further included or some components may be omitted depending on an embodiment. For example, when the first artificial intelligence model 700 and the second artificial intelligence model 710 are trained in advance, the first to fourth learning units 720 to 750 may be omitted. In another example, when the first artificial intelligence model 700 and the second artificial intelligence model 710 are trained in advance through the method of FIG. 2, the medical image conversion apparatus 100 may include the first artificial intelligence model 700 and the second artificial intelligence model 710 and the third learning unit 740 and the fourth learning unit 750 without including the first learning unit 720 and the second learning unit 730. However, hereinbelow, it is assumed that all of the first to fourth learning units 720 to 750 are included.

The first learning unit 720 may train the first artificial intelligence model 700 by using first learning data including a pair of a contrast-enhanced image and a non-contrast image. Herein, the first artificial intelligence model 700 may be a model that generates a contrast-enhanced image by converting a non-contrast image. An example of training the first artificial intelligence model 700 by using the first learning data is shown in FIG. 2.

The first learning data may include actually captured non-contrast image and contrast-enhanced image or a virtual non-contrast image or contrast-enhanced image. For example, the first learning unit 720 may obtain a differential image of two medical images (a high-dose medical image and a low-dose medical image) obtained using a dual energy CT device, generate a virtual non-contrast image indicating a difference between the differential image and the high-dose medical image (or the low-dose medical image), and use the virtual non-contrast image as a non-contrast image of the first learning data. An example of a method of generating a virtual non-contrast image is shown in FIG. 3.

The second learning unit 730 may train the second artificial intelligence model 710 based on second learning data including a pair of the non-contrast image of the first learning data and a contrast-enhanced image obtained through the first artificial intelligence model. The second artificial intelligence model may be a model that generates a non-contrast image by converting a contrast-enhanced image. In another embodiment, the second learning unit 730 may train the second artificial intelligence model by using the first learning data, instead of an output image of the first artificial intelligence model 700.

In the first model architecture 400 of FIG. 4 where an output of the first artificial intelligence model 700 is connected to an input of the second artificial intelligence model 710, the third learning unit 740 may train the first model architecture 400 based on a loss function indicating a difference between an input image and an output image of the first model architecture 400. An example of an additional learning method using the first model architecture 400 is shown in FIG. 4. The input image used in additional learning of the first model architecture may be a non-contrast image actually captured by a single energy CT device.

In the second model architecture 500 of FIG. 5 where an output of the second artificial intelligence model 710 is connected to an input of the first artificial intelligence model 700, the fourth learning unit 750 may train the second model architecture 500 based on a loss function indicating a difference between an input image and an output image of the second model architecture 500. The input image used in additional learning of the second model architecture 500 may be a contrast-enhanced image actually captured by a single energy CT device.

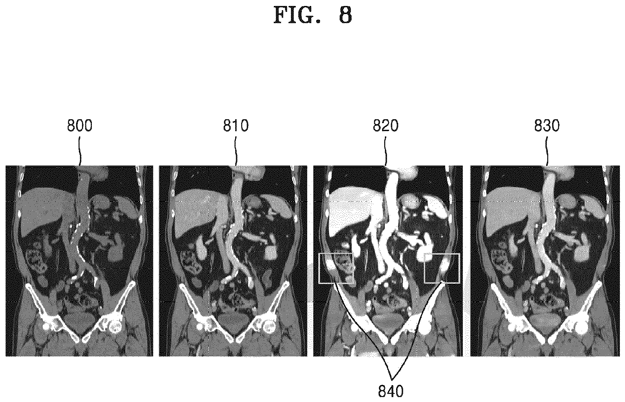

FIG. 8 shows an example of converting a non-contrast image into a contrast-enhanced image by using a medical image conversion method, according to an embodiment.

Referring to FIG. 8, a non-contrast image 800 and a contrast-enhanced image 810 are captured. When the non-contrast image 800 is converted into a contrast-enhanced image 820 through an existing general artificial intelligence model, an artifact 840 may be generated. However, when the non-contrast image 800 is converted into a contrast-enhanced image 830 using a medical image conversion method according to the current embodiment, the presence of the artifact 840 may be significantly reduced and the contrast-enhanced image 830 almost matches the actual contrast-enhanced image 810.

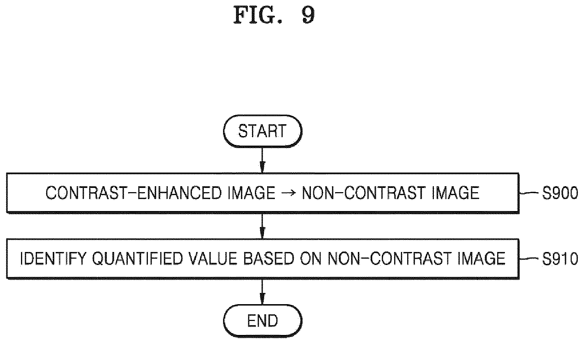

FIG. 9 shows an example of a method of identifying a quantified value from a contrast-enhanced image by using a medical image conversion method according to an embodiment.

Referring to FIG. 9, the medical image conversion apparatus 100 may generate a non-contrast image using a first artificial intelligence model having completed learning (or additional learning) upon input of a contrast-enhanced image thereto, in operation S900. The medical image conversion apparatus 100 may identify a quantified value of a lesion, various tissues, etc., based on the non-contrast image, in operation S910.

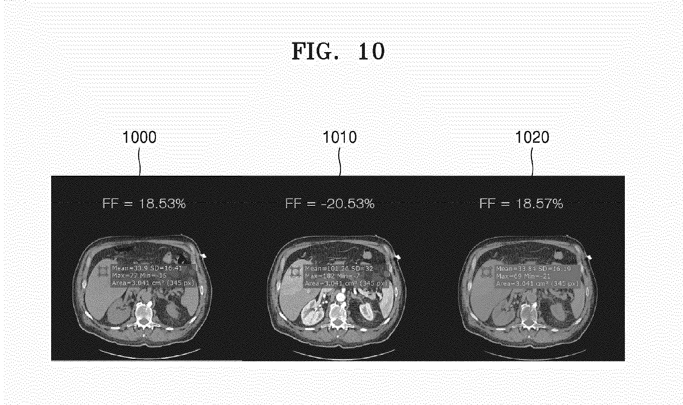

FIG. 10 shows an example where a fatty liver level is identified by using a medical image conversion method according to an embodiment.

Referring to FIG. 10, actually captured non-contrast image 1000 and contrast-enhanced image 1010, and a non-contrast image 1020 obtained by converting the contrast-enhanced image 1010 using a medical image conversion method according to the current embodiment are shown.

A fatty liver level (Fct fraction (FF), %) may be obtained based on a HU of a medical image, and may use, for example, an equation provided below.

$$\text{[Equation 1]}$$

$$\text{Fat Fraction [\%]} = -0.58 * \text{CT[HU]} + 38.2$$

A fatty liver level obtained from the actually captured non-contrast image 1000 using Equation 1 is about 18.53 %. The fatty liver level obtained from the actually captured contrast-enhanced image 1010 is about - 20.53 %, resulting in a large error. That is, it is difficult to identify an accurate fatty liver level in the contrast-enhanced image 1010.

When the contrast-enhanced image 1010 is captured, the contrast-enhanced image 1010 may be converted into the non-contrast image 1020 using a medical image conversion method according to the current embodiment. The fatty liver level obtained from the non-contrast image 1020 generated using the method according to the current embodiment is about 18.57 % that almost matches a fatty liver level obtained from the actually captured non-contrast image 1000.

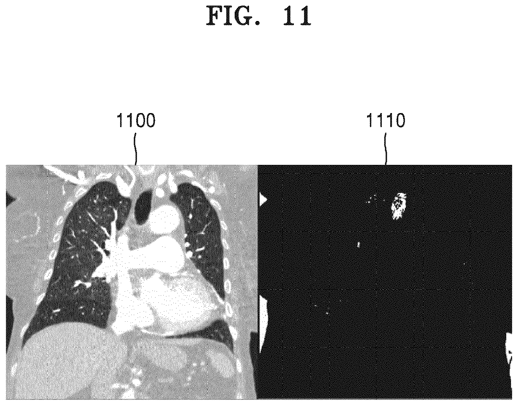

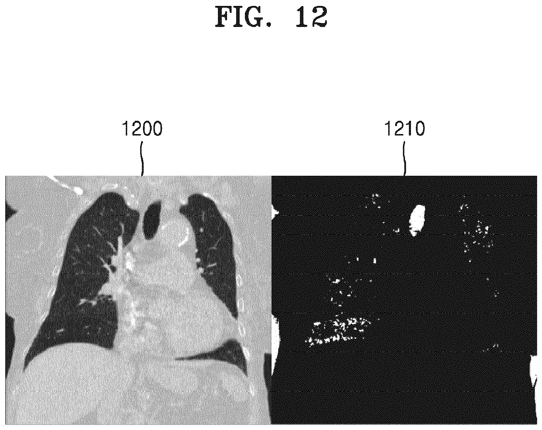

FIGS. 11 and 12 show an example of identifying an emphysema region by using a medical image conversion method according to an embodiment.

An emphysema region 1110 identified from an actually captured contrast-enhanced image 1100 is shown in FIG. 11, and an emphysema region 1210 identified from a non-contrast image 1200 into which the actually captured contrast-enhanced image 1100 is converted using the medical image conversion method according to the current embodiment is shown in FIG. 12. Emphysema quantification may be obtained as a ratio of a part having an HU less than - 950 in a lung region to the entire lung region. It may be seen that the emphysema region 1210 may be accurately identified from the non-contrast image 1200 generated using the medical image conversion method according to the current embodiment.

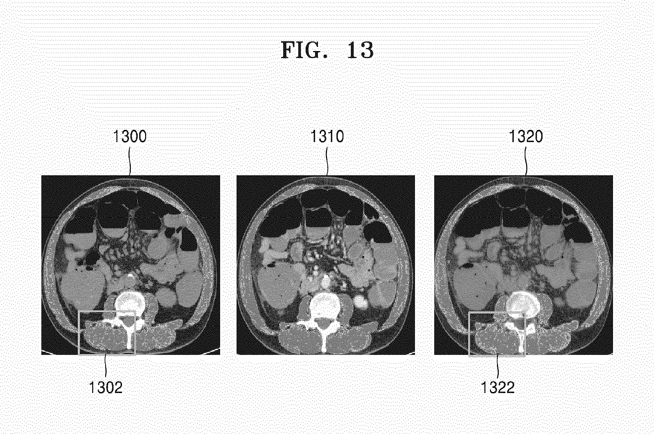

FIG. 13 shows an example of identifying a muscle region by using a medical image conversion method according to an embodiment.

Referring to FIG. 13, examples of muscle quality maps of actually captured non-contrast image 1300 and contrast-enhanced image 1310 and a non-contrast image 1320 generated by converting the contrast-enhanced image 1310 using the medical image conversion method according to the current embodiment are shown. The muscle quality map may include a fat region in muscle (e.g., HU: - 190 to - 30), a low-damping muscle region (e.g., HU: 30 to 150), etc.

It may be seen that a muscle quality map 1322 of the non-contrast image 1320 into which the actually captured contrast-enhanced image 1310 is converted using the medical image conversion method according to the current embodiment almost matches a muscle quality map 1302 of the actually captured non-contrast image 1300.

The disclosure may also be implemented as a computer-readable program code on a computer-readable recording medium. The computer-readable recording medium may include all types of recording devices in which data that is readable by a computer system is stored. Examples of the computer-readable recording medium may include read-only memory (ROM), random access memory (RAM), compact-disc ROM (CD-ROM), a magnetic tape, a floppy disk, an optical data storage device, etc. The computer-readable recording medium may be distributed over computer systems connected through a network to store and execute a computer-readable code in a distributed manner.

So far, embodiments have been described for the disclosure. It would be understood by those of ordinary skill in the art that the disclosure may be implemented in a modified form within a scope without departing from the essential characteristics of the disclosure. Therefore, the disclosed embodiments should be considered in a descriptive sense rather than a restrictive sense. The scope of the present specification is not described above, but in the claims, and all the differences in a range equivalent thereto should be interpreted as being included in the disclosure.

According to an embodiment, a contrast-enhanced image may be generated from a non-contrast image or a non-contrast image may be generated from a contrast-enhanced image. For a patient having a difficulty in being administered with a contrast medium, a non-contrast image may be captured and a contrast-enhanced image for a diagnosis of a lesion, etc., may be generated from the non-contrast image. Alternatively, when a contrast-enhanced image is captured, a non-contrast image may be generated therefrom to accurately identify a quantified value of a lesion, etc. In another example, an artificial intelligence model may be trained using learning data including a virtual non-contrast image and then may be further trained based on an actual cast image or an actual non-contrast image, thereby improving the performance of the artificial intelligence model.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. A medical image conversion method executed by a medical image conversion apparatus implemented as a computer, the medical image conversion method comprising:

   training a first artificial intelligence model to output a second contrast-enhanced image, based on first learning data comprising a pair of a first contrast-enhanced image and a first non-contrast image; and
   training a second artificial intelligence model to output a second non-contrast image, based on second learning data comprising a pair of the first non-contrast image of the first learning data and the second contrast-enhanced image.

2. The medical image conversion method of claim 1, further comprising:

generating a differential image from two medical images captured at different doses; and
generating the first non-contrast image from a difference between the differential image and any one of the two medical images.

3. The medical image conversion method of claim 2, wherein the generating of the differential image comprises obtaining the two medical images using a dual energy computed tomography (CT) device.

4. The medical image conversion method of any of claims 1 to 3, further comprising, in a first model architecture where an output of the first artificial intelligence model is connected to an input of the second artificial intelligence model, training the first model architecture by using a loss function indicating a difference between a third non-contrast image and a fourth non-contrast image that is obtained by inputting the third non-contrast image to the first model architecture.

5. The medical image conversion method of claim 4, wherein the third non-contrast image is an image captured by a single energy CT device.

6. The medical image conversion method of any of claims 1 to 5, further comprising, in a second model architecture where an output of the second artificial intelligence model is connected to an input of the first artificial intelligence model, training the second model architecture by using a loss function indicating a difference between a third non-contrast image and a fourth non-contrast image that is obtained by inputting the third non-contrast image to the second model architecture.

7. The medical image conversion method of any of claims 1 to 6, further comprising obtaining a contrast-enhanced image from a non-contrast image by using the first artificial intelligence model or obtaining a non-contrast image from a contrast-enhanced image by using the second artificial intelligence model.

8. A medical image conversion apparatus comprising:

a first artificial intelligence model (110, 700) configured to generate a contrast-enhanced image from a non-contrast image;
a second artificial intelligence model (120, 710) configured to generate a non-contrast image from a contrast-enhanced image;
a first learning unit (720) configured to train the first artificial intelligence model by using first learning data comprising a pair of a contrast-enhanced image and a non-contrast image; and
a second learning unit (730) configured to train the second artificial intelligence model based on second learning data comprising a pair of the non-contrast image of the first learning data and a contrast-enhanced image obtained by the first artificial intelligence model.

9. The medical image conversion apparatus of claim 8, wherein a non-contrast image of the first learning data is a virtual non-contrast image generated using a difference between a differential image between two medical images obtained by a dual energy computed tomography (CT) device and any one of the two medical images.

10. The medical image conversion apparatus of claim 8 or 9, further comprising a third learning unit (740) configured to train, in a first model architecture where an output of the first artificial intelligence model is connected to an input of the second artificial intelligence model, the first model architecture based on a loss function indicating a difference between an input image and an output image of the first model architecture.

11. The medical image conversion apparatus of claim 10, wherein the input image is a non-contrast image captured by a single energy CT device.

12. The medical image conversion apparatus of any of claims 8 to 11, further comprising a fourth learning unit (750) configured to train, in a second model architecture where an output of the second artificial intelligence model is connected to an input of the first artificial intelligence model, the second model architecture based on a loss function indicating a difference between an input image and an output image of the second model architecture.

13. The medical image conversion apparatus of claim 12, wherein the input image is a contrast-enhanced image captured by a single energy CT device.

14. A computer-readable recording medium having recorded thereon a computer program for executing the medical image conversion method of any of claims 1 to 7.

# FIG. 1

MEDICAL IMAGE
CONVERSION APPARATUS — 100

CONTRAST-ENHANCED IMAGE — 130 → ARTIFICIAL INTELLIGENCE MODEL 1 — 110 → NON-CONTRAST IMAGE — 140

NON-CONTRAST IMAGE — 150 → ARTIFICIAL INTELLIGENCE MODEL 2 — 120 → CONTRAST-ENHANCED IMAGE — 160

**FIG. 2**

# FIG. 3

FIG. 4

MODEL ARCHITECTURE 1 $\quad$ / 400

THIRD
NON-CONTRAST — / 410
IMAGE

ARTIFICIAL
INTELLIGENCE — / 110
MODEL 1

ARTIFICIAL
INTELLIGENCE — / 120
MODEL 2

FOURTH
NON-CONTRAST — / 420
IMAGE

THIRD LOSS FUNCTION $\quad$ / 430

# FIG. 5

THIRD CONTRAST-ENHANCED IMAGE — 510

MODEL ARCHITECTURE 2 — 500

ARTIFICIAL INTELLIGENCE MODEL 2 — 120

ARTIFICIAL INTELLIGENCE MODEL 1 — 110

FOURTH CONTRAST-ENHANCED IMAGE — 520

FOURTH LOSS FUNCTION — 530

# FIG. 6

START

TRAIN FIRST ARTIFICIAL INTELLIGENCE MODEL USING LEARNING DATA OF CONTRAST-ENHANCED IMAGE-NON-CONTRAST IMAGE ——S600

TRAIN SECOND ARTIFICIAL INTELLIGENCE MODEL USING LEARNING DATA AND OUTPUT VALUE OF FIRST ARTIFICIAL INTELLIGENCE MODEL ——S610

FURTHER TAIN FIRST AND SECOND ARTIFICIAL INTELLIGENCE MODELS USING ACTUAL NON-CONTRAST IMAGE OR ACTUAL CONTRAST-ENHANCED IMAGE ——S620

END

# FIG. 7

MEDICAL IMAGE CONVERSION APPARATUS — 100

720 — FIRST LEARNING UNIT

700 — FIRST ARTIFICIAL INTELLIGENCE MODEL

740 — THIRD LEARNING UNIT

730 — SECOND LEARNING UNIT

710 — SECOND ARTIFICIAL INTELLIGENCE MODEL

750 — FOURTH LEARNING UNIT

FIG. 8

800  810  820  830

840

# FIG. 9

START

CONTRAST-ENHANCED IMAGE → NON-CONTRAST IMAGE — S900

IDENTIFY QUANTIFIED VALUE BASED ON NON-CONTRAST IMAGE — S910

END

## FIG. 10

1000  1010  1020

FF = 18.53%  FF = -20.53%  FF = 18.57%

FIG. 11

FIG. 12

# FIG. 13

Europäisches
Patentamt

European
Patent Office

Office européen
des brevets

**EUROPEAN SEARCH REPORT**

Application Number

EP 23 18 6036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 044 120 A1 (KONINKLIJKE PHILIPS NV [NL]) 17 August 2022 (2022-08-17) * abstract; figures 2,4 * * paragraph [0001] * * paragraph [0030] * * paragraph [0033] * * paragraph [0042] * * paragraph [0046] * * paragraph [0061] * * paragraphs [0080] - [0081] * * paragraph [0083] * * paragraphs [0101] - [0103] * * paragraphs [0217] - [0218] * * paragraphs [0222] - [0223] * * paragraph [0234] * ----- | 1-14 | INV. G06T5/00 |
| A | US 2020/294288 A1 (SMITH ANDREW DENNIS [US]) 17 September 2020 (2020-09-17) * abstract; figures 3-5 * ----- | 1-14 | |
| A | WO 2021/015507 A2 (CATHOLIC UNIV KOREA IND ACADEMIC COOPERATION FOUNDATION [KR]) 28 January 2021 (2021-01-28) * abstract; claim 1 * ----- | 1-14 | **TECHNICAL FIELDS SEARCHED (IPC)** G06T |

The present search report has been drawn up for all claims

| Place of search | Date of completion of the search | Examiner |
|---|---|---|
| Munich | 18 October 2023 | Fronthaler, Hartwig |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 339 880 A1

## ANNEX TO THE EUROPEAN SEARCH REPORT
## ON EUROPEAN PATENT APPLICATION NO.

EP 23 18 6036

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2023

| Patent document cited in search report | | Publication date | Patent family member(s) | | Publication date |
|---|---|---|---|---|---|
| EP 4044120 | A1 | 17-08-2022 | EP | 4044120 A1 | 17-08-2022 |
| | | | WO | 2022171597 A1 | 18-08-2022 |
| US 2020294288 | A1 | 17-09-2020 | US | 2020294288 A1 | 17-09-2020 |
| | | | WO | 2020186208 A1 | 17-09-2020 |
| WO 2021015507 | A2 | 28-01-2021 | KR | 20210012233 A | 03-02-2021 |
| | | | WO | 2021015507 A2 | 28-01-2021 |

For more details about this annex : see Official Journal of the European Patent Office, No. 12/82

**REFERENCES CITED IN THE DESCRIPTION**

**Patent documents cited in the description**

- KR 1020220118164

- KR 1020220130819